# FASCICULE DE BREVET EUROPEEN

(11) **EP 1 600 655 B1**
(45) Date de publication et mention de la délivrance du brevet: **20.08.2008**
(21) Numéro de dépôt: 05011085.7
(22) Date de dépôt: 23.05.2005
(51) Int. Cl.: F16D 65/14, F16D 55/22

(54) **Dispositif d'actionnement de frein et frein à disque pour véhicule automobile comportant un tel dispositif**
Bremsbetätigungseinrichtung und Scheibenbremse mit einer solchen Betätigungseinrichtung
Brake actuator and disc brake comprising said brake actuator

(30) Priorité: 27.05.2004 FR 0405764
(43) Date de publication de la demande: 30.11.2005
(73) Titulaire: ROBERT BOSCH GMBH, 70442 Stuttgart (DE)
(72) Inventeur: Pasquet, Thierry, 93190 Livry Gargan (FR)
(74) Mandataire: Hurwic, Aleksander Wiktor

(56) Documents cités:
- EP-A- 1 233 202
- WO-A-02/088561
- GB-A- 2 151 319

## Description

La présente invention concerne un dispositif d'actionnement de frein et un frein à disque pour véhicule automobile comportant un tel dispositif.

Les réglementations en matière de véhicules automobiles exigent que les éléments utilisés dans leur fabrication soient en grande partie recyclables.

En général, les freins d'un véhicule automobile sont actionnés à l'aide d'un dispositif hydraulique comportant en général un vérin hydraulique raccordé à un circuit de liquide de frein. Or, le liquide de frein limite les possibilités de recyclage efficace de la plupart des organes d'un système de freinage.

Afin de remédier à cet inconvénient, on a déjà proposé dans l'état de la technique un dispositif d'actionnement de frein pouvant fonctionner sans liquide de frein, par exemple à l'aide de commandes électriques.

Ainsi, on connaît déjà dans l'état de la technique, notamment d'après WO 02/088561, un dispositif d'actionnement de frein, du type comprenant :
- une partie mobile déplaçable par rapport à une partie fixe afin d'actionner le frein, et
- des moyens de blocage de la partie mobile par rapport à la partie fixe.

Dans ce document, la partie mobile est déplaçable par rapport à la partie fixe à l'aide de moyens comprenant, d'une part, un élément piézoélectrique, susceptible de s'étendre axialement sous l'effet d'un courant électrique, et, d'autre part, des moyens motorisés de blocage.

L'invention a notamment pour but de réduire l'encombrement tel d'un dispositif d'actionnement de frein.

A cet effet, l'invention a pour objet un dispositif d'actionnement de frein du type précité, **caractérisé en ce que** les moyens de blocage comprennent au moins une première masse de blocage déformable sous l'effet d'une commande électrique.

Les moyens de blocage sont alors directement activés par une commande électrique, sans l'intermédiaire de moyens motorisés encombrants.

Un dispositif d'actionnement de frein selon l'invention peut en outre comporter l'une ou plusieurs des caractéristiques suivantes :
- la partie mobile forme un piston monté mobile dans une chambre de coulissement ménagée dans un corps formant la partie fixe, les moyens de blocage étant agencés sur la périphérie du piston en contact avec la surface du corps délimitant la chambre de coulissement ;
- la première masse de blocage a une forme générale d'anneau fendu, sensiblement coaxial au piston, déformable radialement ;
- les moyens de blocage comportent une seconde masse de blocage en forme générale d'anneau fendu sensiblement coaxial au piston et déformable radialement, cette seconde masse de blocage étant reliée à la première masse de blocage à l'aide d'une masse d'entretoisement déformable au moins axialement dans la chambre de coulissement ;
- la masse d'entretoisement comporte au moins un élément magnétostrictif déformable sous l'effet d'un champ magnétique ;
- le champ magnétique est créé par un enroulement électrique porté par la partie mobile, dans lequel est logé l'élément magnétostrictif ;
- le dispositif comprend des moyens élastiques de rappel des première et seconde masses déformables l'une vers l'autre ;
- les moyens de rappel comprennent un ressort tubulaire ondulé axialement entourant la masse d'entretoisement ;
- le ressort relie deux supports d'extrémité du piston portant chacun une masse de blocage et coopérant avec une extrémité correspondante de la masse d'entretoisement ; et
- chaque masse de blocage comprend au moins un élément piézoélectrique déformable sous l'effet d'une tension électrique.

L'invention concerne également un frein à disque pour véhicule automobile du type comprenant un piston de vérin de serrage du disque, porté par un étrier, **caractérisé en ce que** l'étrier porte un dispositif d'actionnement de frein selon l'invention, le piston de vérin formant la partie mobile et l'étrier formant le corps de la partie fixe

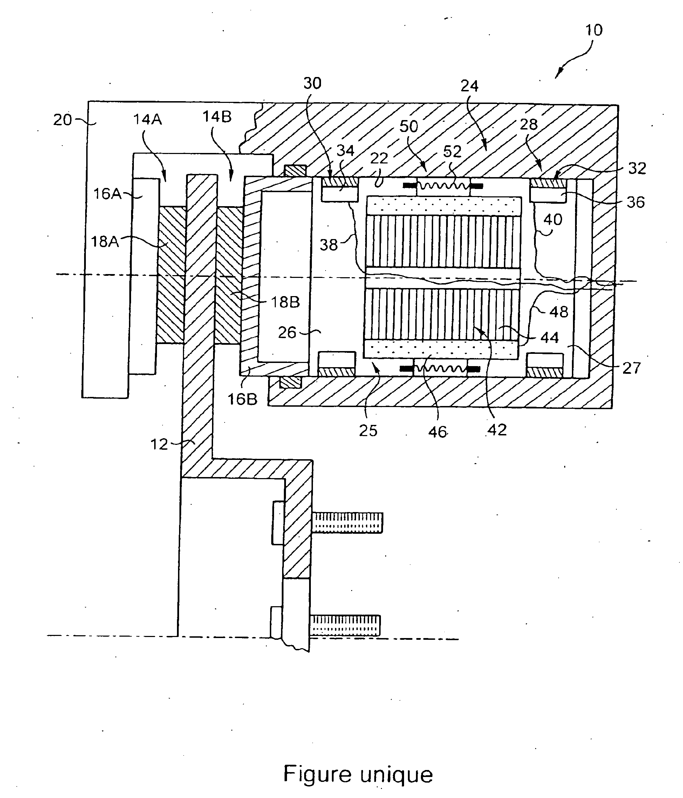

L'invention sera mieux comprise à la lecture de la description qui va suivre, donnée uniquement à titre d'exemple et faite en se référant aux dessins annexés dans lesquels la figure unique est une vue schématique en coupe axiale d'un frein à disque selon l'invention.

On a représenté sur la figure unique un frein à disque, désigné par la référence générale 10.

Le frein 10 comporte un disque 12 susceptible d'être enserré entre des premier 14A et second 14B organes de friction.

Ces premier 14A et second 14B organes de friction sont respectivement munis de première 16A et seconde 16B embases, portant des première 18A et seconde 18B garnitures de friction.

En général, les première 16A et seconde 16B embases sont montées mobiles en translation sur une chape fixe (non représentée). Les première 16A et seconde 16B embases coopèrent avec un étrier 20 coulissant par rapport à la chape.

Dans l'exemple représenté, la seconde embase 16B est montée mobile en translation dans une chambre de coulissement 22 ménagée dans l'étrier 20. Cette embase 16B est déplaçable par rapport à cet étrier 20 sous l'effet d'un dispositif 24 d'actionnement de frein.

L'étrier 20 étant susceptible de se déplacer par rapport à la chape, les première 16A et seconde 16B embases sont toutes deux mobiles en translation par rapport à cette chape. Le disque 12 peut ainsi être enserré entre les première 18A et seconde 18B garnitures de friction par déplacement des première 16A et seconde 16B embases.

En variante, les première 16A et seconde 16B embases peuvent être toutes deux montées mobiles dans l'étrier 20 en étant déplaçables chacune sous l'effet d'un dispositif 24 d'actionnement de frein.

Le dispositif 24 d'actionnement de frein comporte une partie mobile 25 déplaçable par rapport à une partie fixe formée par l'étrier 20, afin d'actionner le frein 10.

La partie mobile forme un piston 25 monté mobile dans la chambre de coulissement 22 ménagée dans le corps 20 formant la partie fixe. Ce piston 25 comporte notamment des premier 26 et second 27 supports d'extrémité, mobiles par rapport à la partie fixe 20, et mobiles l'un par rapport à l'autre.

Le premier support d'extrémité 26 est lié aux déplacements axiaux de l'embase 16B.

Le dispositif 24 comporte en outre des moyens de blocage 28 du piston 25 par rapport à la partie fixe 20. Les moyens de blocage 28 sont agencés sur la périphérie du piston 25 en contact avec la surface du corps délimitant la chambre de coulissement 22.

Les moyens de blocage 28 comprennent des première 30 et seconde 32 masses de blocage, portés respectivement par les premier 26 et second 27 supports d'extrémité du piston 25. Les première 30 et seconde 32 masses de blocage ont des formes générales d'anneaux fendus, sensiblement coaxiaux au piston 25, et déformables radialement sous l'effet de commandes électriques.

De préférence, les première 30 et seconde 32 masses de blocage comportent respectivement des premier 34 et second 36 éléments piézoélectriques déformables sous l'effet d'une tension électrique. Les déformations de ces premier 34 et second 36 éléments piézoélectriques sont commandées par l'intermédiaire de signaux électriques véhiculés respectivement par des premier 38 et second 40 câbles électriques.

Les première 30 et seconde 32 masses de blocage sont reliées entre elles à l'aide d'une masse d'entretoisement 42, déformable au moins axialement dans la chambre de coulissement 22. Chacune des extrémités de cette masse d'entretoisement 42 coopère avec l'un des supports d'extrémité 26 et 27 correspondant.

De préférence, la masse d'entretoisement 42 comporte une pluralité d'éléments magnétostrictifs 44 empilés déformables sous l'effet d'un champ magnétique.

Ce champ magnétique est créé au moyen d'un enroulement électrique 46, porté par le piston 25, dans lequel sont logés les éléments magnétostrictifs 44. L'enroulement électrique 46 est alimenté en courant électrique à l'aide d'un câble électrique 48.

Le piston. 25 comporte en outre des moyens élastiques 50 de rappel des première 30 et seconde 32 masses déformables l'une vers l'autre. Ces moyens de rappel 50 comprennent par exemple un ressort tubulaire 52, ondulé axialement, et entourant la masse d'entretoisement 42. Ce ressort 52 relie les premier 26 et second 27 supports d'extrémité du piston 25.

Le piston 25 est déplacé de préférence comme une chenille, par alimentation électrique séquentielle des masses déformables 30 et 32 et de l'enroulement électrique 46, conformément à une loi de commande prédéterminée.

Ainsi, le déplacement du piston 25 dans le sens de serrage du disque 12 est réalisé selon les étapes suivantes, au cours desquelles un élément est dit activé (respectivement désactivé) lorsqu'il est alimenté électriquement (respectivement lorsqu'il n'est plus alimenté électriquement) :
- le second élément piézoélectrique 36 est activé afin que la seconde masse de blocage 32 se déforme de manière à bloquer le second support d'extrémité 27 par rapport au corps fixe 20 ;
- l'enrdulement électrique 46 est activé de manière à créer un champ magnétique pour que les éléments magnétostrictifs 44, et donc la masse d'entretoisement 42, s'étendent axialement ;
- le premier élément piézoélectrique 34 est activé afin de bloquer le premier support d'extrémité 26 dans cette position par rapport au corps fixe 20 ;
- le second élément piézoélectrique 36 est désactivé afin de libérer le second support 27 par rapport au corps fixe 20 ;
- l'enroulement électrique 46 est désactivé de manière à faire cesser le champ magnétique et rétracter les éléments magnétostrictifs 44. Le ressort 52 rappelle alors le second support 27 vers le premier support 26 ;
- le second élément piézoélectrique 36 est alors à nouveau activé de manière à bloquer le second support 27 par rapport au corps fixe 20, et le premier élément piézoélectrique 34 est désactivé pour libérer le premier support 26 par rapport au corps fixe 20.

Il suffit de répéter ces étapes pour procéder à un actionnement du frein à disque 10.

Le dispositif 24 d'actionnement de frein permet donc un serrage efficace du disque 12, uniquement à l'aide de commandes électriques.

Lorsque l'action de freinage est arrêtée, les premier et second éléments piézoélectriques sont désactivés de façon à interrompre l'action du piston 25 et le serrage du disque 12.

Le cas échéant, notamment pour contrôler précisément la position du piston 25 par rapport à l'étrier 20, un déplacement volontaire du piston 25 dans le sens de desserrage du disque 12 est réalisé selon le même principe :
- le premier élément piézoélectrique 34 est activé afin que la première masse de blocage 30 se déforme de manière à bloquer le premier support 26 d'extrémité du piston par rapport au corps fixe 20 ;
- l'enroulement électrique 46 est activé de manière à créer un champ magnétique pour que les éléments magnétostrictifs 44, et donc la masse d'entretoisement 42, s'étendent axialement ;
- le second élément piézoélectrique 36 est activé afin de bloquer le second support d'extrémité 27 dans cette position par rapport au corps fixe 20 ;
- le premier élément piézoélectrique 34 est désactivé de manière à libérer le premier support 26 par rapport au corps fixe 20 ;
- l'enroulement électrique 46 est désactivé de manière à faire cesser le champ magnétique et rétracter les éléments magnétostrictifs 44. Le ressort 52 rappelle alors le premier support 26 vers le second support 27 ;
- le premier élément piézoélectrique 34 est alors à nouveau activé de manière à bloquer le premier support 26 par rapport au corps fixe 20, et le second élément piézoélectrique 36 est désactivé pour libérer le second support 27 par rapport au corps fixe 20.

On notera enfin que l'invention n'est pas limitée au mode de réalisation précédemment décrit.

En effet, en variante, les éléments déformables au moyen d'une commande électrique pourront être indifféremment des éléments piézoélectriques ou magnétostrictifs, voire des éléments en matériau à mémoire de forme.

## Revendications

1. Dispositif (24) d'actionnement de frein (10), du type comprenant :
- une partie mobile (25) déplaçable par rapport à une partie fixe (20) afin d'actionner le frein (10), et
- des moyens (28) de blocage de la partie mobile (25) par rapport à la partie fixe (20),
**caractérisé en ce que** les moyens de blocage (28) comprennent au moins une première masse de blocage (30, 32) déformable sous l'effet d'une commande électrique.

2. Dispositif (24) d'actionnement de frein (10) selon la revendication 1, **caractérisé en ce que** la partie mobile (25) forme un piston (25) monté mobile dans une chambre de coulissement (22) ménagée dans un corps formant la partie fixe (20), les moyens de blocage (28) étant agencés sur la périphérie du piston (25) en contact avec la surface du corps (20) délimitant la chambre de coulissement (22).

3. Dispositif (24) d'actionnement de frein (10) selon la revendication 2, **caractérisé en ce que** la première masse de blocage (30, 32) a une forme générale d'anneau fendu, sensiblement coaxial au piston (25), déformable radialement.

4. Dispositif (24) d'actionnement de frein (10) selon la revendication 3, **caractérisé en ce que** les moyens de blocage (28) comportent une seconde masse de blocage (30, 32) en forme générale d'anneau fendu sensiblement coaxial au piston (25) et déformable radialement, cette seconde masse de blocage (30, 32) étant reliée à la première masse de blocage (30, 32) à l'aide d'une masse d'entretoisement (42) déformable au moins axialement dans la chambre de coulissement (22).

5. Dispositif (24) d'actionnement de frein (10) selon la revendication 4, **caractérisé en ce que** la masse d'entretoisement (42) comporte au moins un élément magnétostrictif (44) déformable sous l'effet d'un champ magnétique.

6. Dispositif (24) d'actionnement de frein (10) selon la revendication 5, **caractérisé en ce que** le champ magnétique est créé par un enroulement électrique (46), porté par la partie mobile (25), dans lequel est logé l'élément magnétostrictif (44).

7. Dispositif (24) d'actionnement de frein (10) selon l'une quelconque des revendications 4 à 6, **caractérisé en ce qu'**il comprend des moyens élastiques (50) de rappel des première et seconde masses déformables (30, 32) l'une vers l'autre.

8. Dispositif (24) d'actionnement de frein (10) selon la revendication 7, **caractérisé en ce que** les moyens de rappel (50) comprennent un ressort tubulaire (52) ondulé axialement entourant la masse d'entretoisement (42).

9. Dispositif (24) d'actionnement de frein (10) selon la revendication 8, **caractérisé en ce que** le ressort (52) relie deux supports (26, 27) d'extrémité du piston (25) portant chacun une masse de blocage (30, 32) et coopérant avec une extrémité correspondante de la masse d'entretoisement (42).

10. Dispositif (24) d'actionnement de frein (10) selon l'une quelconque des revendications précédentes, **caractérisé en ce que** chaque masse de blocage (30, 32) comprend au moins un élément piézoélectrique (34, 36) déformable sous l'effet d'une tension électrique.

11. Frein (10) à disque pour véhicule automobile du type comprenant un piston de vérin (25) de serrage du disque (12), porté par un étrier (20), **caractérisé en ce que** l'étrier (20) porte un dispositif (24) d'actionnement de frein (10) selon l'une quelconque des revendications 2 à 9, le piston de vérin (25) formant la partie mobile (25) et l'étrier (20) formant le corps de la partie fixe (20).

## Claims

1. Device (24) for actuating a brake (10), of the type comprising:
- a moving part (25) that can be moved with respect to a stationary part (20) in order to actuate the brake (10), and
- means (28) of immobilizing the moving part (25) with respect to the stationary part (20),
**characterized in that** the immobilizing means (28) comprise at least one first immobilizing mass (30, 32) that can be deformed under the effect of an electrical command.

2. Device (24) for actuating a brake (10) according to Claim 1, **characterized in that** the moving part (25) forms a piston (25) mounted such that it can move in a sliding chamber (22) formed in a body that makes up the stationary part (20), the immobilizing means (28) being arranged at the periphery of the piston (25) in contact with the surface of the body (20) defining the sliding chamber (22).

3. Device (24) for actuating a brake (10) according to Claim 2, **characterized in that** the first immobilizing mass (30, 32) has the overall shape of a split ring, substantially coaxially with the piston (25) and radially deformable.

4. Device (24) for actuating a brake (10) according to Claim 3, **characterized in that** the immobilizing means (28) comprise a second immobilizing mass (30, 32) in the overall form of a split ring substantially coaxial with the piston (25) and radially deformable, this second immobilizing mass (30, 32) being connected to the first immobilizing mass (30, 32) via a spacing mass (42) that can be deformed at least axially in the sliding chamber (22).

5. Device (24) for actuating a brake (10) according to Claim 4, **characterized in that** the spacing mass (42) comprises at least one magnetostrictive element (44) that can be deformed under the effect of a magnetic field.

6. Device (24) for actuating a brake (10) according to Claim 5, **characterized in that** the magnetic field is created by an electrical winding (46) carried by the moving part (25) and in which the magnetostrictive element (44) is housed.

7. Device (24) for actuating a brake (10) according to any one of Claims 4 to 6, **characterized in that** it comprises elastic means (50) for returning the first and second deformable masses (30, 32) towards one another.

8. Device (24) for actuating a brake (10) according to Claim 7, **characterized in that** the return means (50) comprise an axially corrugated tubular spring (52) surrounding the spacing mass (42).

9. Device (24) for actuating a brake (10) according to Claim 8, **characterized in that** the spring (52) connects two end supports (26, 27) of the piston (25) each of which supports an immobilizing mass (30, 32) and collaborates with a corresponding end of the spacing mass (42).

10. Device (24) for actuating a brake (10) according to any one of the preceding claims, **characterized in that** each immobilizing mass (30, 32) comprises at least one piezoelectric element (34, 36) that can be deformed under the effect of a voltage.

11. Disc brake (10) for a motor vehicle, of the type comprising a cylinder piston (25) for clamping the disc (12), carried by a caliper (20), **characterized in that** the caliper (20) carries a device (24) for actuating a brake (10) according to any one of Claims 2 to 9, the cylinder piston (25) forming the moving part (25) and the caliper (20) forming the body of the stationary part (20).

## Patentansprüche

1. Vorrichtung (24) zum Betätigen einer Bremse (10), vom Typ mit:
- einem beweglichen Teil (25), der bezüglich eines feststehenden Teils (20) verschiebbar ist, um die Bremse (10) zu betätigen, und
- Mitteln (28) zum Blockieren des beweglichen Teils (25) bezüglich des feststehenden Teils (20),
**dadurch gekennzeichnet, dass** die Blockierungsmittel (28) mindestens eine erste Blockiermasse (30, 32) aufweisen, die unter der Wirkung einer elektrischen Steuerung verformbar ist.

2. Vorrichtung (24) zum Betätigen einer Bremse (10) nach Anspruch 1, **dadurch gekennzeichnet, dass** der bewegliche Teil (25) einen Kolben (25) bildet, der in einer Gleitkammer (22) beweglich angebracht ist, die in einem den feststehenden Teil (20) bildenden Körper ausgebildet ist, wobei die Blockierungsmittel (28) am Umfang des Kolbens (25) angeordnet sind, der mit der Fläche des Körpers (20) in Kontakt steht, der die Gleitkammer (22) begrenzt.

3. Vorrichtung (24) zum Betätigen einer Bremse (10) nach Anspruch 2, **dadurch gekennzeichnet, dass** die erste Blockiermasse (30, 32) die allgemeine Form eines gespaltenen Rings hat, der im Wesentlichen koaxial zum Kolben (25) und radial verformbar ist.

4. Vorrichtung (24) zum Betätigen einer Bremse (10) nach Anspruch 3, **dadurch gekennzeichnet, dass** die Blockierungsmittel (28) eine zweite Blockiermasse (30, 32) aufweisen, die die allgemeine Form eines gespaltenen Rings hat, der im Wesentlichen koaxial zum Kolben (25) und radial verformbar ist, wobei diese zweite Blockiermasse (30, 32) mit der ersten Blockiermasse (30, 32) mit Hilfe einer Verstrebungsmasse (42), die mindestens axial in der Gleitkammer (22) verformbar ist, verbunden ist.

5. Vorrichtung (24) zum Betätigen einer Bremse (10) nach Anspruch 4, **dadurch gekennzeichnet, dass** die Verstrebungsmasse (42) mindestens ein magnetostriktives Element (44) aufweist, das unter der Wirkung eines Magnetfeldes verformbar ist.

6. Vorrichtung (24) zum Betätigen einer Bremse (10) nach Anspruch 5, **dadurch gekennzeichnet, dass** das Magnetfeld durch eine elektrische Wicklung (46) erzeugt wird, die vom beweglichen Teil (25) getragen und in welcher das magnetostriktives Element (44) aufgenommen ist.

7. Vorrichtung (24) zum Betätigen einer Bremse (10) nach einem der Ansprüche 4 bis 6, **dadurch gekennzeichnet, dass** sie elastische Mittel (50) zum Rückstellen der ersten und zweiten verformbaren Massen (30, 32) zu einander.

8. Vorrichtung (24) zum Betätigen einer Bremse (10) nach Anspruch 7, **dadurch gekennzeichnet, dass** die Rückstellmittel (50) eine rohrförmige Feder (52) aufweisen, die axial gewellt ist und die Verstrebungsmasse (42) umgibt.

9. Vorrichtung (24) zum Betätigen einer Bremse (10) nach Anspruch 8, **dadurch gekennzeichnet, dass** die Feder (52) zwei Endträger (26, 27) des Kolbens (25) verbindet, die jeweils eine Blockiermasse (30, 32) tragen und mit einem entsprechenden Ende der Verstrebungsmasse (42) zusammenwirken.

10. Vorrichtung (24) zum Betätigen einer Bremse (10) nach einem der vorhergehenden Ansprüche, **dadurch gekennzeichnet, dass** jede Blockiermasse (30, 32) mindestens ein piezoelektrisches Element (34, 36) aufweist, das unter der Wirkung einer elektrischen Spannung verformbar ist.

11. Scheibenbremse (10) für Kraftfahrzeug, vom Typ mit einem Stellzylinderkolben (25) zum Einspannen der Scheibe (12), der von einem Bügel (20) getragen ist, **dadurch gekennzeichnet, dass** der Bügel (20) eine Vorrichtung (24) zum Betätigen einer Bremse (10) nach einem der Ansprüche 2 bis 9 trägt, wobei der Stellzylinderkolben (25) den beweglichen Teil (25) und der Bügel (20) den Körper des feststehenden Teils (20) bildet.
